(19) Europäisches Patentamt
European Patent Office
Office européen des brevets

(11) EP 2 326 041 A1

(12) EUROPEAN PATENT APPLICATION

(43) Date of publication:
25.05.2011 Bulletin 2011/21

(51) Int Cl.:
H04L 9/06 (2006.01)    G06F 7/72 (2006.01)

(21) Application number: 09306115.8

(22) Date of filing: 19.11.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(71) Applicant: Gemalto SA
92190 Meudon (FR)

(72) Inventor: Coron, Jean-Sébastien
92190 Meudon (FR)

(54) **Countermeasures against power attacks for the randomization of the exponent**

(57)    The invention relates to a method for protecting an electronic device against a side channel attack scrutinizing the physical behavior of the electronic device while it executes a cryptographic algorithm in order to crack the value of a secret parameter used by the cryptographic algorithm. The method comprises computing a randomized parameter to be used in the cryptographic algorithm instead of the secret parameter which protection is sought. After having computed an initial number of randomized parameters based on the secret parameter, the electronic device carries out each subsequent computation of a randomized parameter based on a previously randomized parameter.

The invention also relates to the electronic device.

EP 2 326 041 A1

## Description

The invention relates to electronic devices implementing cryptographic algorithms involving a secret parameter. It relates in particular to electronic devices implementing cryptographic algorithms (such as RSA, Diffie Hellman, or DSA) which involve an exponentiation with a secret parameter consisting of a private exponent, and to cryptographic algorithms (such as those based on elliptic curves, a.k.a ECC) which involve a point multiplication with a secret parameter consisting of a private key.

Secret parameters (e.g. RSA private exponent of an RSA private key, or elliptic curves private keys) typically have to be kept securely in the electronic device. It is well known to lock an electronic device in order to make sure that a secret parameter is not readable using the interface of the electronic device. For example, it is impossible to read a private RSA key stored in a smart card elementary file EF using an ISO 7816-4 Read_Binary command as long as proper access conditions are defined. Unfortunately, different sorts of attacks (e.g. SPA or DPA) have been devised which enable cracking secret parameters by scrutinizing the physical behavior of the electronic device while it executes the cryptographic algorithm. Such attacks are generally called side channel attacks, and may be any attack based on information gained from the physical implementation of a cryptosystem, as opposed to cryptanalysis which comprise carrying out brute force attacks or finding theoretical weaknesses in the cryptographic algorithms. For example, timing information, power consumption, electromagnetic leaks or even sound can provide an extra source of information which can be exploited to attack the electronic device. Many side channel attacks require considerable technical knowledge of the internal operation of the electronic device on which the cryptographic algorithm is implemented. But an electronic device which is not protected against side channel attacks may reveal the value of the secret parameter to a skilled attacker having access to proper information. Indeed, the power consumed (or other measurable characteristic) typically varies according to the task carried out by the electronic device. For example, especially in unprotected electronic devices, the power consumed when a bit of a secret parameter is equal to 1 is not the same as the power consumed when the same bit of the secret parameter is equal to 0. In particular, in an unprotected RSA modular exponentiation, wherein the secret parameter to attack is the RSA private exponent, for each bit of the RSA private exponent which is equal to 1, there is typically a square operation and a multiply operation, while for each bit which is equal to 0, there is typically only a square operation which consumes less power and could therefore be distinguished from a square and multiply.

Electronic devices which need to be protected against side channel attacks now typically comprise hardware security features in order to render information such as power consumption as independent as possible from the tasks which are carried out (e.g. executed instructions), for example a capacitor may be included at the power supply interface in order to smooth out power consumption, and sources of random noise may be superposed to the power consumption. Consequently, a single spying of a cryptographic algorithm execution (with a basic attack such as Simple Power Analysis a.k.a SPA) is typically insufficient to crack the secret parameter. But attackers can sometimes still, after spying the execution of the cryptographic algorithm thousands of times, carry out statistical analysis (e.g. with a Differential Power Analysis a.k.a DPA) on the recorded samples in order to guess the value of the secret parameter by removing the noise and overcoming the smoothing effect which is typically not 100% efficient. Statistical analysis (such as DPA) based on many samples also has another advantage over basic techniques such as SPA, as it typically does not require (if properly done) determining the details of the specific implementation of the cryptographic algorithm to attack, while in order to carry out an attack with a single sample (as in SPA), it is typically necessary to be able to identify the exact time at which each bit of the secret parameter is manipulated, and to analyze power consumption or other physical characteristic at this exact time in order to guess the bit value.

Other techniques have been proposed in order to render side channel attacks less efficient and unable to recover secret parameters. One technique is described in European patent application number EP1166495 ("Countermeasure Method In An Electric Component Implementing An Elliptical Curve Type Public Key Cryptography Algorithm", by the same inventor), published on 2 January 2002. This countermeasures consists, in the case of RSA, in adding a multiple of phi (N) to the private exponent d, where N is the RSA modulus (or similarly adding a multiple of the number of points in case of ECC), as shown in equation (1) below:

$$d'=d+k*phi(N) \qquad (1)$$

where k is a random integer.

Then the randomized exponent d' is used to perform the exponentiation instead of the original private exponent d. This makes a side channel attack against the exponentiation algorithm a lot more difficult since a different randomized exponent d' is used for each new exponentiation.

However, an attack has been described against this countermeasure by Fouque et al. at the CHES 2008 conference. Fouque attack consists in attacking the randomization step directly, i.e. in attacking the computation step which executes equation (1) above, and not the subsequent exponentiation step. This attack is particularly effective against electronic devices executing the RSA algorithm with an 8-bit microprocessor, but it can also work against 16-bit and 32-bit microprocessors. The attack comprises spying the electronic device. For example the attack may record a sample representing power consumption during a period of time during which the randomization step is carried out. The attack does the spying repeatedly (e.g. records many samples). Then, the samples are analyzed. Each sample records the behavior of the electronic device while it executes a series of operations, comprising the randomization step. For example, in the case of RSA, the randomization step can be written $d_j = d + r_j$ wherein d is the private exponent to protect, and $d_j$ is the randomized exponent for step j. $r_j$ is assumed to be a uniformly distributed integer, usually $r_j = R_j * phi(N)$, where $R_j$ is a random number, and $phi(N) = (p-1)*(q-1)$, wherein N is the RSA modulus equal to $p*q$ (p and q being two big prime numbers). The addition $d_j = d + r_j$ is executed with I-bit words (for some I). Fouque attack takes advantage of the fact that probability to have a carry during the addition on each I-bit word depends on the value of the private exponent d. The presence (and number) of carries can be detected in the samples (since power consumption is typically different when a carry occurs), and from the number of carries it is possible to determine, if the number of samples is big enough (typically the square root of the number of samples should be at least equal to $2^I$), the value of a word of the private exponent, and by doing this for all words, the value of the whole exponent.

It is an aim of the invention to improve the countermeasure in order to make the electronic device more resistant to side channel attacks.

A method according to the invention improves the protection of an electronic device against a side channel attack scrutinizing the physical behavior of the electronic device while it executes a cryptographic algorithm in order to crack the value of a secret parameter used by the cryptographic algorithm. It is typically not possible to guarantee a 100% efficient protection against all conceivable attacks (including those not yet discovered), but the proposed method improves the security significantly by blocking at least the Fouque attack.

The electronic device can be for example a smart card, a USB cryptographic token, an HSM (hardware security module), a TPM (trusted platform module), a security chip used in an electronic document (such as e-passport, e-healthcare card, e-driving license, e-ID card or tachograph), a security computer or security server (e.g. firewall, VPN appliance, etc.) or any other electronic security device. The electronic device could also be a computing device such as a conventional personal computer, a conventional (non security) server, a mobile phone, a PDA, or any electronic device not designed specifically for security but able to implement a cryptographic algorithm, although such devices are typically less secure from a hardware standpoint, and are potentially prone to software attacks which are usually easier to carry out than the side channel attacks prevented by the invention. The invention is therefore usually more advantageous with electronic security devices.

The method comprises, in a known manner, computing a randomized parameter to be used, in the cryptographic algorithm, instead of the secret parameter which protection is sought. The secret parameter is typically a cryptographic private key (e.g. ECC private key) or a secret part of a cryptographic private key (e.g. private exponent of an RSA private key, wherein the RSA private key also comprises a modulus, the modulus being public). Not all cryptographic operations need to be protected by the invention. For example, a security function implementing an RSA private key operation (e.g. for carrying out a digital signature of a message) followed by an RSA public key operation (e.g. for carrying out an encryption of the message which was just signed) could protect the private key used for the signature with the method according to the invention, but would typically not need to protect the public key (which is not a secret parameter) used for the encryption. In most systems, asymmetric cryptography is used precisely because it allows sharing the public keys with everybody, and it would therefore typically be preferred to skip the protection according to the invention when carrying out the public key operation (as the protection step typically reduces the speed of the cryptographic algorithm). It may therefore be wise to optimize the performance by not protecting the public key operations, especially if the method is implemented in software only. This optimization is however not useful from a performance standpoint in certain embodiments, in which the protection is implemented by hardware means and does not affect the overall speed performance of the security function. In this case, it may be easier, for example in the case of RSA, to protect every modular exponentiation (whether the modular exponentiation is carried out with a private or a public exponent), as it may avoid checking the sensitivity of the exponent. However, there are other reasons which may lead (and often lead) to have two different functions implementing respectively the public and the private exponentiations. It is also possible to decide that certain secret parameters stored in the electronic device have to be protected by the invention, while others, even though they are secret too, do not have to be protected. For example, there may be different levels of sensitivity of signature keys, and some may not need to be protected. It may also be considered, for example, that a private key used for digital signature has to be generated by the electronic device and to never leave it, while a private key used for decryption has to be generated by a server (e.g. by the certificate authority), and then has to be pushed into the electronic device. This may be advantageous because:

- For the signature aspect, a private signature key should not be accessible to anybody else than the signatory in order to guarantee the identity of the signatory of the signatures produced. If the private key is lost it only makes it impossible to continue to sign with the lost private key, but it is possible to generate a new signature private key in order to generate future signatures, and it is still possible to check the validity of old signatures with the old signature public key (typically archived in a server)

- For the decryption aspect, it is important to guarantee that only the legitimate key holder can decrypt encrypted information, but it is also important to make sure that in case the electronic device is lost, damaged or stolen, it is still possible to decrypt previously encrypted material. In this case the tradeoff is usually favorable to a key backup in a server. One should trust that nobody will use the backup in the server to decrypt data illegitimately, but at least in case of electronic device unavailability the encrypted material is still accessible by reloading the backup private key in a new electronic device.

In such a scenario, it would be conceivable to protect the signature private key stored in the electronic device with the method according to the invention, but to not protect the decryption private key stored in the electronic device with the method according to the invention. This choice could be made for example if it is considered that the security level of the server storing the backup of the private decryption key is much lower than the electronic device security level, and that it is useless to be more secure than the server if the hacker has the possibility to attack the easiest target. However it could also be considered wise to use the highest available levels of protections wherever possible, especially if the speed performance is not affected (as would be the case for a properly designed hardware implementation of the invention).

The method according to the invention is characterized by the fact that after having computed an initial number (typically small, and preferably equal to one or two) of randomized parameters based on the secret parameter, the electronic device carries out each subsequent computation of a randomized parameter based on a previously randomized parameter (rather than based on the secret parameter). Since the subsequent computations of randomized parameters do not manipulate directly the secret parameter, there is no more risk to leak the secret parameter in a Fouque attack during the randomization process. Indeed the initial computations of randomized parameters are not sufficient to enable a side channel attack. The randomized parameters are computed in such a way that carrying out the cryptographic algorithm with the randomized parameters gives the same output as if the cryptographic algorithm had been carried out with the secret parameter. The initial computations of randomized parameters can be optionally carried out as soon as the electronic device is manufactured and personalized. The initial randomized parameters can therefore be computed when the key is generated by the electronic device or loaded in the electronic device. But it is also possible, for example, to wait until the secret parameter has to be used for the first time, and at this time to generate the initial randomized parameters. It is preferred to never use the secret parameter (but always a randomized parameter), although it would be possible to use the secret parameter during the first calls to the cryptographic algorithm (i.e. to not enforce the method according to the invention immediately but only after a certain time) as long as the number of uses of the secret parameter is small enough to not enable a side channel attack.

In a preferred embodiment of the method the electronic device computes a randomized parameter each time the cryptographic algorithm needs to use a secret parameter which protection is sought. For example, each time a digital signature command is sent to a PKI smart card protected with the preferred method, the PKI smart card could compute a new randomized parameter (e.g. a new randomized RSA private exponent in case the signature is an RSA signature) to be used instead of the secret parameter. This is advantageous because the electronic device does never use twice the same parameter, and it is therefore almost impossible for the attacker to determine the value of any of such parameters (not only the secret parameter, but also any of the randomized parameters). In general the attacker needs to record plenty of samples (e.g. one thousand) to carry out the attack (this is typically the case for DPA attacks). One sample can for example consist of the recording of the curve representing the power consumption during a digital signature. So even if the same parameter is reused a few times (potentially leading to a few samples being recorded by an attacker for a given parameter) it would normally not enable the attack although the protection would probably be a bit weaker. On the other hand, the speed of the method may be improved by not computing a new randomized parameter each time, so in certain cases it may be a good tradeoff to accept a potentially slightly less secure but faster method. Such cases are expected to be rare because the method according to the invention, even if implemented in software only, does not typically slow down the cryptographic algorithm significantly. But in a method according to the invention that would be optimized for speed instead of being optimized for security, the above described PKI card (or similarly any electronic device protected by the method according to the invention) could for example carry out the first three digital signatures (or similarly carry out three times any operation involving the secret parameter at stake) with the RSA private exponent to be protected. The number three is just given as an example, it could as well be two, or ten, or any other small value, as long as this value is much less (e.g. a hundred times less) than the number of samples presumably required to carry out an attack. In the above example of three signatures, when the digital signature command of the PKI card is called for the first, the second and the third time (e.g. to sign three different documents) with reference to the same credentials (same RSA private key), it uses each time the (original) RSA private key. Then only would the PKI card (either when asked to compute the third or the fourth digital signature with this same RSA private key) compute the initial randomized exponents (e.g. just after computing the third signature, or just before computing the fourth one), so that when the PKI card is requested to compute a digital signature for the fourth time with this specific credential (the RSA private key which exponent has to be protected), it would do it with a randomized parameter (randomized exponent in this case) instead of the "real" (original) secret parameter. Then the randomized parameter could similarly be reused a few times (e.g. three times) in order to optimize speed, until a new randomized parameter would be computed, etc.

It should be noted that a given electronic device (e.g. PKI smart card) can store multiple credentials, each comprising its own secret parameter. For example the user of the PKI card can have an RSA private key for signature, and another RSA private key for decryption. The user can also have several RSA private keys for signatures (e.g. one for signing as the employee of his company, one for signing as a citizen of his state, etc.). There could also potentially be several users storing their respective cryptographic keys in a single electronic device, although most often (and in preferred embodiments) the electronic device is personal and linked to a single individual. The method according to the invention manages secret parameters individually, so if there are several secret parameters, each needs to be managed individually (e.g. in the above example of method which is optimized for speed, there could be separate counters for each secret parameter in order to know when the third operation involving each of said secret parameter is reached).

According to a preferred embodiment, the secret parameter is a private key used in a point multiplication carried out by the cryptographic algorithm (for example an ECC algorithm).

According to a preferred method which will be referred to as the stateful randomized exponent countermeasure method, the electronic device initially computes one randomized parameter, and subsequently computes each new randomized parameter based on the last randomized parameter. This method is typically simpler. It is also possible to base the computation of the next randomized parameter on the last but one randomized parameter, or any earlier parameter, or any combination of earlier parameters, as soon as the value of the randomized parameter is updated regularly with new values (not already computed before).

According a first preferred embodiment of the stateful randomized exponent countermeasure method, the cryptographic algorithm is the RSA algorithm. d denotes the RSA private exponent. N denotes the RSA modulus, which is equal to p*q (where p and q are two big prime numbers) as well known in the art (conventional variable names are used). As known in the art, phi(N) is equal to (p-1)*(q-1). A non-protected modular exponentiation of input data X would comprise computing $X^d$ mod N. The first preferred embodiment comprises computing, instead of the modular exponentiation $X^d$ mod N which could leak the private exponent d after it has been used a certain number of times (as a hacker could record a sample for each use and carry out statistical analysis), an exponentiation $X^{d'}$ mod N relying on a randomized exponent d'. The randomized exponent d' is computed as follows. The electronic device initially defines d' as being equal to d, and defines an integer B, where B is greater than $phi(N)*2^a$ where a is a positive integer. B may have been predefined and pre-stored in the electronic device beforehand. For example B may be defined when the electronic device is personalized (typically just after being manufactured). But B could also be defined when the electronic device is used for the first time, or when the RSA private key operation involving the private exponent d to protect is invoked for the first time. This integer B can be written in flash memory, EEPROM, or any other non volatile memory (e.g. ROM in case B is a constant). It is possible to take a constant value for B, for example B can be equal to $2^{a+max(size(phi(N)))}$ where max(size(phi(N))) is the maximum possible size of phi(N) in bits. For the sake of simplicity, it is also possible to use, instead of max(size(phi(N)), the size of the register used to store phi(N), for example in RSA2048, phi(N) would be typically stored in a 2048 bit register, and B could be equal to $2^{2048+a}$ Then, each time a computation of a new randomized exponent is needed (typically each time the RSA private key operation is invoked, although as has been seen earlier it is possible to do it less frequently by optimizing for speed), the electronic device generates a random integer k (the size of the positive integer k is a bits), and compares d' with B. If d' is found to be smaller than or equal to B, the electronic device replaces d' by the value d' + k*phi(N), which will become the new randomized exponent. While if d' is found to be greater than B, the electronic device replaces d' by d' - k*phi(N). As well known in the art, adding the value phi(N) or any multiple thereof to the exponent does not change the value of the modular exponentiation. On the other hand, the exponent used (the new value d') is not the same anymore, and the side channel attack according to Fouque et al is disabled. The technique proposed (with the comparison with a value B) allows the randomized exponent to never exceed a maximum authorized value and to never become negative.

According a second preferred embodiment of the stateful randomized exponent countermeasure method, the above first embodiment is modified so that the computation of d' is carried as follows. The electronic device initially defines d' as being equal to d, generates a random integer k' (the size of k' can be for example 60 bits for RSA2048), and computes an integer A=k'*phi(N), which can be stored in Flash memory, EEPROM, or any non volatile memory. This can be done for example when the electronic device is personalized (typically just after being manufactured), or when it is used for the first time, or when the RSA private key operation involving the private exponent d to protect is invoked for the first time. Contrary to the integer B mentioned in the previous embodiment, A cannot be a constant and is a sensitive value which should be treated with care. Then, each time a computation of a new randomized exponent is needed, the electronic device generates a random integer k (positive integer, which size is a bits), and replaces d' by d' + k*phi(N) mod A. A computation of a new randomized exponent is typically needed each time the RSA private key operation is invoked, although as has been seen earlier it is possible to compute a randomized exponent less frequently by optimizing for speed. This method however presents one potential weakness, due to the fact that a modulo is computed on a regular basis with a sensitive constant (the value A initially generated at random), which could potentially open the door to an attack.

According a third preferred embodiment of the stateful randomized exponent countermeasure method, which is a variant of the above second embodiment, instead of computing the integer A once for all, it is computed each time a computation of a new randomized exponent is needed. This is a bit slower (the randomization time is more or less doubled), but more secure, and should be preferred in most situations, especially considering that the randomization time can be expected to be negligible compared to the modular exponentiation time in a conventional environment.

The last three preferred embodiments of the stateful randomized exponent countermeasure method prevent the Fouque et al. attack because the addition of a multiple of phi(N) is performed with an evolving d', instead of a fixed d as in the original randomized exponent countermeasure. However, a drawback of this countermeasure is that the new d' typically has to be written in non volatile memory for each new execution (since the countermeasure is stateful), which may take a bit of time if the memory is slow, and which may cause memory wear (and impose the use of well known techniques to prevent wear by writing to different memory locations, which may render the implementation more complex).

According to a preferred embodiment, which will be referred to as the multiplicative countermeasure method, the electronic device initially computes a number K of randomized parameters (K is greater than or equal to 2, and typically does not need to be greater than $2^8$ (a bigger value could consume too much memory to store all initially randomized parameters), and subsequently computes each new randomized parameter based on a linear combination of at least two of the K randomized parameters, wherein the coefficients of the linear combination are random. For example, each time a randomized parameter is needed, two initially randomized parameters can be selected randomly among the K available, and can be linearly combined with random coefficients.

According to a preferred version of the multiplicative countermeasure method, the cryptographic algorithm is the RSA algorithm. d denotes the RSA private exponent. N denotes the RSA modulus, which is equal to p*q (as well known in the art). phi(N) is equal to (p-1)*(q-1). A non-protected modular exponentiation of input data X would comprise computing $X^d$ mod N. This preferred version comprises computing, instead of the modular exponentiation $X^d$ mod N (which could leak the private exponent d after a certain number of exponentiations with d have been computed), an exponentiation $X^{d'}$ mod N relying on a randomized exponent d'. The randomized exponent d' is computed as follows. The electronic devices initially generates two random integers k0 and k1 (k0 and k1 are positive integers), and two randomized exponents d0 and d1, wherein d0=d+k0*phi(N) and d1=d+(k0+k1)*phi(N). For the computation of each new randomized exponent, the electronic devices generates a random integer r (a small positive integer, which can have a length similar to the length of k0 and k1), and defines d' as d'=(r+1)*d1-r*d0. Since we have d'=d+ ((r+1)*k1+k0)*phi(N), d' is a randomized exponent. The attack of Fouque et al at CHES 2008 conference does not apply anymore with this multiplicative countermeasure method because the subtraction carried out when computing d' is done between two randomized integers, instead of a randomized integer and a fixed d. An advantage of this countermeasure is that it is stateless and therefore typically does not require writing the previous d' in non volatile memory, which protects non volatile memory from wearing.

In a preferred version of the three preferred embodiments of the stateful randomized exponent countermeasure method, the size a of the random number k (and of the random number k', when applicable) is much smaller than the size of the modulus N. For example, k and k' may be around 60 bits long (a=60), while the modulus is typically 2048 bits long (can also be 1024 or 4096 bits in less frequent implementations, or even other values, which are however quite uncommon today). Similarly, in the preferred version of the multiplicative countermeasure method, k0, k1 and r can all three have a length of about 60 bits.

Securing the secret parameter according to the above methods can be implemented in software. The computation of the randomized parameter can be carried out by a microprocessor (for example, if the electronic device is a smart card, by a smart card microcontroller). Securing the secret parameter can also be implemented at least partially in hardware (e.g. wired logic can compute the randomized parameter), which is typically faster but may require a custom chip or a chip comprising features allowing the implementation of custom function in the chip. For example many smart card microcontrollers (e.g. STMicroelectronics recent versions of ST19) comprise ASIC logic blocks which could be used for that purpose. The above methods can comprise including subfunctions (such as computing a randomized parameter) in libraries provided in security chips such as smart card chips. The above methods are complementary with known hardware countermeasures such as smoothing of power consumption (or other information available outside the electronic device such as electromagnetic radiations), or superposition of random noise in power consumption. Combining the method according to the invention with such countermeasures should improve security even further.

The invention also relates to an electronic device comprising protection means to protect against a side channel attack scrutinizing the physical behavior of the electronic device while it executes a cryptographic algorithm in order to crack the value of a secret parameter used by the cryptographic algorithm. The protection means are set to compute a randomized parameter to be used in the cryptographic algorithm instead of the secret parameter which protection is sought. The protection means can consist of software routines, hardware, or a combination of software and hardware. In general it is preferred to at least generate random numbers with hardware means, as software random number generators usually have a lower quality. In preferred embodiments, the electronic device is a smart card chip. Smart card chips typically comprise a hardware random number generator which could be used in this context. The electronic device is characterized in that the protection means are set, after having computed an initial number of randomized parameters based on the secret parameter, to carry out each subsequent computation of a randomized parameter based on a previously randomized parameter.

The preferred embodiments and variants described above in relation to the method can apply equally to the electronic device.

In addition, the embodiments described for RSA apply similarly to other cryptographic algorithms relying on a modular exponentiation. The method applies equally to cryptographic algorithms in which the secret parameter is a private key used in a point multiplication carried out by the cryptographic algorithm (for example an ECC algorithm). In the case of ECC, n being the number of points of the elliptic curve concerned (a.k.a the order of the group), dd being the secret parameter (the private key to protect), the operation Q=dd*P (P being a point of the elliptic curve) is replaced by the operation Q=dd'*P, wherein dd' is a randomized private key. The randomized private key dd' can be computed from a previously randomized private key for example as follows: dd' = dd'+kk*n, wherein kk is a random integer, which can be picked in the interval $[0..2^s]$ where s is typically equal to approximately 30.

## Claims

1. A method for protecting an electronic device against a side channel attack scrutinizing the physical behavior of the electronic device while it executes a cryptographic algorithm in order to crack the value of a secret parameter used by the cryptographic algorithm, the method comprising computing a randomized parameter to be used in the cryptographic algorithm instead of the secret parameter which protection is sought, the method being **characterized in that** after having computed an initial number of randomized parameters based on the secret parameter, the electronic device carries out each subsequent computation of a randomized parameter based on a previously randomized parameter.

2. The method according to claim 1, wherein the electronic device computes a randomized parameter each time the cryptographic algorithm needs to use a secret parameter which protection is sought.

3. The method according to claim 1 or 2, wherein the electronic device initially computes one randomized parameter, and subsequently computes each new randomized parameter based on the last randomized parameter.

4. The method according to claim 1 or 2, wherein the electronic device initially computes a number K of randomized parameters, and subsequently computes each new randomized parameter based on a linear combination of at least two of the K randomized parameters, wherein the coefficients of the linear combination are random.

5. The method according to any previous claim wherein the secret parameter is a private exponent used in an exponentiation carried out by the cryptographic algorithm.

6. The method according to any of claims 1 to 4, wherein the secret parameter is a private key used in a point multiplication carried out by the cryptographic algorithm.

7. The method according to claims 3 and 5, the cryptographic algorithm being the RSA algorithm, d denoting the RSA private exponent, N denoting the RSA modulus, N being equal to p*q, phi(N) being equal to (p-1)*(q-1), wherein a non-protected modular exponentiation of input data X computes $X^d$ mod N, wherein the method comprises computing, instead of $X^d$ mod N, $X^{d'}$ mod N, the randomized exponent d' being computed as follows:

   a. the electronic device initially defines d' as being equal to d, and defines an integer B
   b. for the computation of each new randomized exponent, the electronic device generates a random integer k, and compares d' with B; if d' is smaller than or equal to B, the electronic device replaces d' by d' + k*phi(N), while if d' is greater than B, it replaces d' by d' - k*phi(N).

8. The method according to claims 3 and 5, the cryptographic algorithm being the RSA algorithm, d denoting the RSA private exponent, N denoting the RSA modulus, N being equal to p*q, phi(N) being equal to (p-1)*(q-1), wherein a non-protected modular exponentiation of input data X computes X^d mod N, wherein the method comprises computing, instead of X^d mod N, X^d' mod N, the randomized exponent d' being computed as follows:

a. the electronic device initially defines d' as being equal to d, generates a random integer k', and computes A=k'*phi(N)

b. for the computation of each new randomized exponent, the electronic device generates a random integer k, and replaces d' by d' + k*phi(N) mod A.

9. The method according to claims 3 and 5, the cryptographic algorithm being the RSA algorithm, d denoting the RSA private exponent, N denoting the RSA modulus, N being equal to p*q, phi(N) being equal to (p-1)*(q-1), wherein a non-protected modular exponentiation of input data X computes X^d mod N, wherein the method comprises computing, instead of X^d mod N, X^d' mod N, the randomized exponent d' being computed as follows:

a. the electronic device initially defines d' as being equal to d,

b. for the computation of each new randomized exponent, the electronic device generates two random integers k and k', computes A=k'*phi(N), and replaces d' by d' + k*phi(N) mod A.

10. The method according to claim 7, 8 or 9, wherein the size of the random number k is much smaller than the size of the modulus N.

11. The method according to claims 4 and 5, the cryptographic algorithm being the RSA algorithm, d denoting the RSA private exponent, N denoting the RSA modulus, N being equal to p*q, phi(N) being equal to (p-1)*(q-1), wherein a non-protected modular exponentiation of input data X computes ^X^d mod N, wherein the method comprises computing, instead of X^d mod N, X^d' mod N, the randomized exponent d' being computed as follows:

a. the electronic devices initially generates two random integers k0 and k1, and two randomized exponents d0 and d1, wherein d0=d+k0*phi(N) and d1=d+(k0+k1)*phi(N)

b. for the computation of each new randomized exponent, the electronic devices generates a random integer r, and defines d' as d'=(r+1)*d1-r*d0

12. An electronic device comprising protection means to protect against a side channel attack scrutinizing the physical behavior of the electronic device while it executes a cryptographic algorithm in order to crack the value of a secret parameter used by the cryptographic algorithm, the protection means being set to compute a randomized parameter to be used in the cryptographic algorithm instead of the secret parameter which protection is sought, the electronic device being **characterized in that** the protection means are set, after having computed an initial number of randomized parameters based on the secret parameter, to carry out each subsequent computation of a randomized parameter based on a previously randomized parameter.

Europäisches
Patentamt
European
Patent Office
Office européen
des brevets

**EUROPEAN SEARCH REPORT**

Application Number

EP 09 30 6115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 00/59157 A1 (GEMPLUS CARD INT [FR]; CORON JEAN SEBASTIEN [FR]) 5 October 2000 (2000-10-05) * pages 12-13 * * page 8, lines 1-12 * * page 9, lines 1-9 * | 1-12 | INV. H04L9/06 G06F7/72 |
| A | KOCHER P C ED - KOBLITZ N (ED): "TIMING ATTACKS ON IMPLEMENTATIONS OF DIFFIE-HELLMAN, RSA, DSS, AND OTHER SYSTEMS" ADVANCES IN CRYPTOLOGY - CRYPTO '96. 16TH. ANNUAL INTERNATIONAL CRYPTOLOGY CONFERENCE. SANTA BARBARA, AUG. 18 - 22, 1996. PROCEEDINGS; [PROCEEDINGS OF THE ANNUAL INTERNATIONAL CRYPTOLOGY CONFERENCE (CRYPTO)], BERLIN, SPRINGER, DE, vol. CONF. 16, 18 August 1996 (1996-08-18) , pages 104-113, XP000626590 ISBN: 978-3-540-61512-5 * chapter 10; pages 111-112 * | 1-12 | |
| A,D | PIERRE-ALAIN FOUQUE ET AL: "The Carry Leakage on the Randomized Exponent Countermeasure" 10 August 2008 (2008-08-10), CRYPTOGRAPHIC HARDWARE AND EMBEDDED SYSTEMS Â CHES 2008; [LECTURE NOTES IN COMPUTER SCIENCE], SPRINGER BERLIN HEIDELBERG, BERLIN, HEIDELBERG, PAGE(S) 198 - 213 , XP019102177 ISBN: 9783540850526 * sections 2 and 2.1; page 200 * * section 6; pages 209-210 * | 1-12 | TECHNICAL FIELDS SEARCHED (IPC) H04L G06F |
| A | FR 2 923 305 A1 (INSIDE CONTACTLESS SA [FR]) 8 May 2009 (2009-05-08) * pages 20-22; figure 4 * | 1-12 | |

The present search report has been drawn up for all claims

| Place of search | Date of completion of the search | Examiner |
|---|---|---|
| Munich | 19 May 2010 | Horbach, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 09 30 6115

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2010

| Patent document cited in search report | | Publication date | Patent family member(s) | | Publication date |
|---|---|---|---|---|---|
| WO 0059157 | A1 | 05-10-2000 | AU 3660300 A | | 16-10-2000 |
| | | | CN 1345496 A | | 17-04-2002 |
| | | | EP 1166495 A1 | | 02-01-2002 |
| | | | FR 2791496 A1 | | 29-09-2000 |
| | | | JP 2002540484 T | | 26-11-2002 |
| | | | MX PA01009402 A | | 04-06-2002 |
| | | | US 7286666 B1 | | 23-10-2007 |
| FR 2923305 | A1 | 08-05-2009 | WO 2009092903 A2 | | 30-07-2009 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1166495 A